# EUROPÄISCHE PATENTSCHRIFT

(11) **EP 1 186 091 B1**
(45) Veröffentlichungstag und Bekanntmachung des Hinweises auf die Patenterteilung: **02.04.2003**
(21) Anmeldenummer: 00947791.0
(22) Anmeldetag: 07.06.2000
(51) Int. Cl.: H02M 5/458, H02M 7/48

(54) **SPANNUNGSZWISCHENKREIS-UMRICHTER**
INDIRECT VOLTAGE CONVERTER
CONVERTISSEUR DE TENSION INDIRECT

(30) Priorität: 14.06.1999 DE 19926979
(43) Veröffentlichungstag der Anmeldung: 13.03.2002
(73) Patentinhaber: SIEMENS AKTIENGESELLSCHAFT, 80333 München (DE)
(72) Erfinder: GREIF, Tomas, D-91341 Röttenbach (DE); SPITZ, Matthias, D-91086 Aurachtal (DE)
(86) Internationale Anmeldenummer: DE0001847
(87) Internationale Veröffentlichungsnummer: WO00077917

(56) Entgegenhaltungen:
- EP-A- 0 899 861
- EP-A- 0 913 918
- US-A- 5 155 671
- US-A- 6 049 195
- JIE ZHANG: "High Performance Control of a Three-Level IGBT Inverter fed AC Drive." IEEE, 8. Oktober 1995 (1995-10-08), Seiten 22-28, XP000550940
- A. CH. RUFER: "An aid in the teaching of multilevel inverters for high power applications" IEEE, 12. Juni 1995 (1995-06-12), Seiten 347-352, XP000548428
- PATENT ABSTRACTS OF JAPAN vol. 1998, no. 09 -& JP 10 108474 A (DENSO CORP.)

## Beschreibung

Die Erfindung bezieht sich auf einen Spannungszwischenkreis-Umrichter gemäß Oberbegriff des Anspruchs 1.

Ein derartiger Umrichter ist aus der DE-Zeitschrift "etz", Heft 20, 1998, Seiten 10 bis 12, bekannt. Dieser bekannte Spannungszwischenkreis-Umrichter hat in der Standardausrüstung einen 12-pulsigen Diodengleichrichter, deren Teildiodengleichrichter jeweils mit einer Sekundärwicklung eines Dreiwicklungstransformators verbunden sind. Gleichspannungsseitig sind die Teildiodengleichrichter jeweils mit einem Kondensator eines Spannungszwischenkreises verknüpft, der zwei elektrisch in Reihe geschaltete Kondensatoren aufweist. Ein derartiger Eingangsstromrichter wird auch als Diode Front End (DFE) bezeichnet. Ein derartiges Diode Front End erfüllt in den meisten Fällen die Anforderungen bezüglich Netzleistungsfaktor und Oberschwingungsgehalt. Werden höhere Anforderungen bezüglich Netzrückwirkung gestellt, so steht ein 24-pulsiger Eingangs-Stromrichter zur Verfügung.

Aus der DE-Zeitschrift "engineering and automation", Heft 1-2, 1998, Seiten 8 und 9, ist ein Spannungszwischenkreis-Umrichter bekannt, der als Eingangsstromrichter einen selbstgeführten Pulsstromrichter aufweist. Dieser ist wie der maschinenseitige Pulsstromrichter als Drei-Punkt-Pulsstromrichter ausgeführt. Als Spannungszwischenkreis sind zwei elektrisch in Reihe geschaltete Kondensatoren vorgesehen. Diese Schaltungsoption des Eingangsstromrichters wird auch als Active Front End (AFE) bezeichnet. Mit einem Active Front End ist ein Vierquadrantenbetrieb (Antreiben und regeneratives Bremsen in beiden Drehrichtungen) möglich. Mittels dieses aktiven Eingangs-Stromrichters läßt sich nicht nur ein Leistungsfaktor von cos ϕ = 1 realisieren, sondern man kann zusätzlich im Rahmen der Leistungsreserven auch noch die Blindleistung anderer Verbraucher im Netz kompensieren. Wird das Active Front End mit einem Eingangsfilter ausgerüstet, ist darüber hinaus, ein fast oberschwingungsfreier Betrieb am Netz möglich.

Der Nachteil eines Diode Front End ist dieser, daß kein Vierquadrantenbetrieb ohne weiteren Aufwand möglich ist. Der Mehraufwand besteht darin, daß für den generatorischen Betrieb ein Brems-Chopper notwendig ist, mit dem die generatorische Energie in einem Bremswiderstand in Wärme umgesetzt wird. Durch die 12-Pulsigkeit bzw. 24-Pulsigkeit des Diode Front End werden die Oberschwingungsströme der 5., 7., 11. und 13. bzw. der 5., 7., 13., 23. und 25. Oberwelle ausgelöscht. Bei der 24-pulsigen Ausführungsform des Diode Front End verdoppelt sich der Aufwand eingangsseitig gegenüber der 12-pulsigen Ausführungsform des Diode Front End, wodurch nicht nur der Platzbedarf steigt.

Der Nachteil eines Active Front End ist dieser, daß entsprechend seiner Pulszahl die 5., 7., 11., 13.,... Oberwellen auftreten, deren Amplituden mittels eines optimierten Pulsmuster wenigstens minimiert werden können. Außerdem ist das Active Front End aufgrund der Anzahl und der Ausführungsform der Bauelemente aufwendiger als ein Diode Front End. Da das Active Front End vom Aufbau her dem maschinenseitigen selbstgeführten Pulsstromrichter entspricht, weist ein Spannungszwischenkreis-Umrichter mit Active Front End einen größeren Platzbedarf auf als ein Spannungszwischenkreis-Umrichter mit einem 12-pulsigen Diode Front End.

Der Erfindung liegt nun die Aufgabe zugrunde, einen Spannungszwischenkreis-Umrichter anzugeben, dessen Eingangs-Stromrichter so ausgebildet ist, daß die auf der Netzseite auftretenden Oberschwingungen möglichst mit kleinem Aufwand niedrig gehalten werden.

Diese Aufgabe wird erfindungsgemäß mit den kennzeichnenden Merkmalen des Anspruchs 1 gelöst.

Dadurch, daß die Teilstromrichter des 12-pulsigen Eingangsstromrichters jeweils ein selbstgeführter Pulsstromrichter sind, werden die Vorteile eines Diode Front End mit denen eines Active Front End kombiniert. Das heißt, auf der Netzseite des Spannungszwischenkreis-Umrichters werden die Oberschwingungsströme der 5., 7., 17, und 19. Oberwelle ausgelöscht, ohne daß die optimierten Pulsmuster der selbstgeführten Pulsstromrichter auf diese genannten Oberschwingungen optimiert sind. Da die beiden Teilstromrichter denselben Betriebszustand haben, sind deren Pulsmuster gleich. Dieses optimierte Pulsmuster kann nun dahingehend optimiert werden, daß die Amplituden der Oberschwingungsströme der 11., 13., 25., ... Oberwelle minimiert werden.

Ein weiterer Vorteil dieses erfindungsgemäßen Eingangs-Stromrichters eines Spannungszwischenkreis-Umrichters macht sich bei sehr hohen Spannungen bemerkbar. Die Stromrichter für genormte Mittelspannungen weisen ab einem Spannungswert von 3,3 kV Stromrichterventile mit einer Reihenschaltzahl Zwei und mehr auf. Da der erfindungsgemäße Eingangs-Stromrichter zwei gleiche selbstgeführte Pulsstromrichter aufweist, die elektrisch in Reihe geschaltet sind, ist die Reihenschaltzahl der Teilstromrichter gleich bzw. um eins kleiner als die Reihenschaltzahl des Maschinen-Stromrichters. Bei der genormten Mittelspannung von 4,16 kV weist der Eingangs-Stromrichter eines Spannungszwischenkreis-Umrichters nach der Erfindung genauso viele Stromrichterventile auf wie ein Eingangs-Stromrichter in der Ausführungsform Activ Front End. Bei gleicher Reihenschaltzahl können als Stromrichterventile niedersperrende Halbleiterschalter verwendet werden, die mit einer höheren Schaltfrequenz betrieben werden können oder eine höhere Stromausnutzung aufweisen. Bei einer um Eins geringeren Reihenschaltzahl ist der Aufbau der Phasenmodule einfacher und platzsparender.

Vorteilhafte Ausführungsformen des Eingangs-Stromrichters sind den Unteransprüchen 2 bis 6 zu entnehmen.

Zur näheren Erläuterung der Erfindung wird auf die Zeichnung Bezug genommen, in der eine Ausführungsform des erfindungsgemäßen Eingangs-Stromrichters schematisch veranschaulicht ist.
- FIG 1: zeigt ein Blockschaltbild eines gattungsgemäßen Spannungszwischenkreis-Umrichters in der Standardausführung, die
- FIG 2: zeigt ein Blockschaltbild eines erfindungsgemäßen Eingangs-Stromrichters eines Spannungszwischenkreis-Umrichters nach FIG 1 und die
- FIG 3 - 5: zeigen jeweils ein Phasenmodul des Maschinen-Stromrichters des Spannungszwischenkreis-Umrichters mit der Reihenschaltzahl 1, 2 und 3.

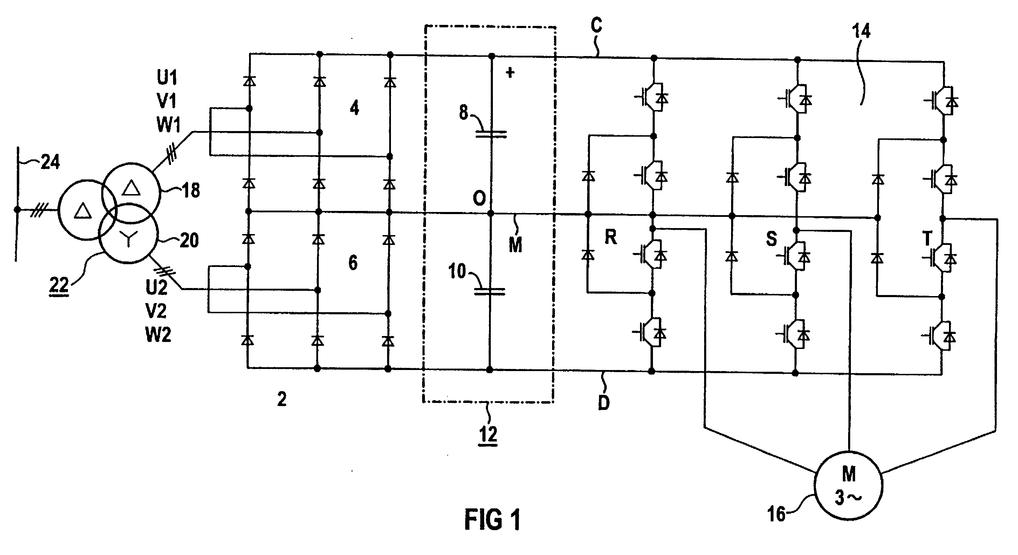

Die FIG 1 zeigt ein Blockschaltbild eines gattungsgemäßen Spannungszwischenkreis-Umrichters in der Standardausführung mit einem 12-pulsigen Eingangs-Stromrichter 2. Die beiden Teilstromrichter 4 und 6 dieses Eingangs-Stromrichters 2 sind jeweils ein 6-pulsiger Diodengleichrichter. Jeder Teilstromrichter 4 bzw. 6 ist gleichspannungsseitig mit einem Kondensator 8 bzw. 10 eines Spannungszwischenkreises 12 verknüpft. Da diese beiden Kondensatoren 8 und 10 elektrisch in Reihe geschaltet sind, weist dieser Spannungszwischenkreis 12 drei Potentiale C, M und D auf. Außerdem weist dieser Spannungszwischenkreis-Umrichter einen Maschinen-Stromrichter 14 auf, an dessen wechselstromseitigen Ausgängen R, S, T eine Drehfeldmaschine 16 angeschlossen ist. Gleichspannungsseitig ist dieser Maschinen-Stromrichter 14 mit den drei Potentialen C, M und D des Spannungszwischenkreises 12 elektrisch leitend verbunden. Als Stromrichterventile des Maschinen-Stromrichters 14 sind High-Voltage-Insulated-Gate-Bipolar-Transistor (HV-IGBT) vorgesehen. Der Maschinen-Stromrichter 14 ist in einer Dreipunkt-Schaltungstechnik ausgeführt. Die Teilstromrichter 4 und 6 des Eingangs-Stromrichters 2 sind wechselstromseitig jeweils mit einer Sekundärwicklung 18 und 20 eines Dreiwicklungstransformators 22 elektrisch leitend verbunden. Primärseitig ist dieser Dreiwicklungstransformator 22 mit einem dreiphasigen Netz 24 verknüpft.

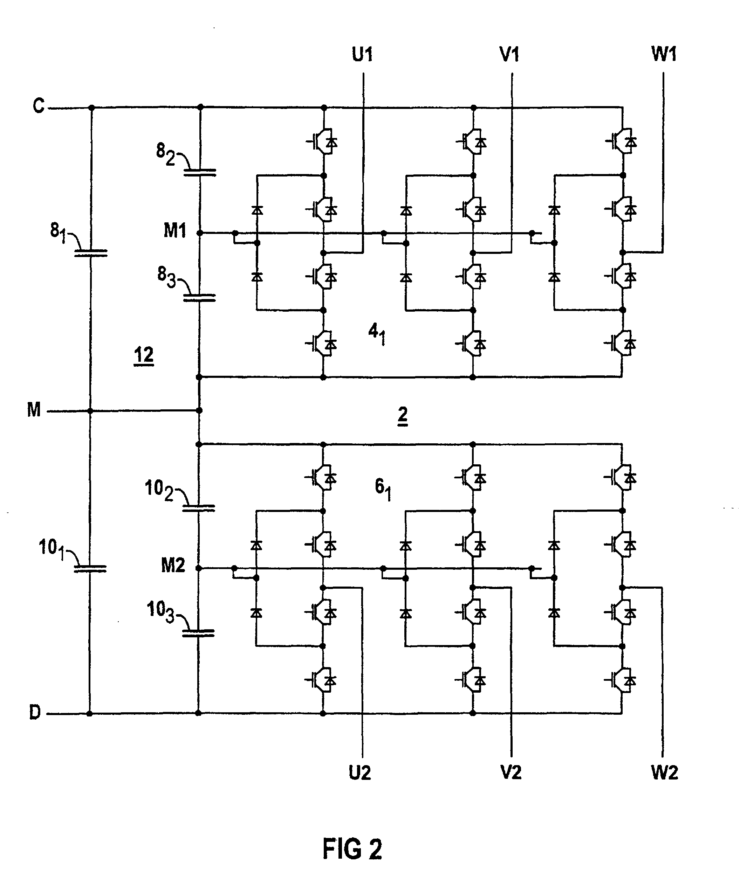

In der FIG 2 ist ein Blockschaltbild eines Eingangs-Stromrichters 2 in einer erfindungsgemäßen vorteilhaften Ausführungsform dargestellt. Dieser Eingangs-Stromrichter 2 weist als Teilstromrichter 4 bzw. 6 einen selbstgeführten Pulsstromrichter 4₁ bzw. 6₁ auf. Diese beiden Pulsstromrichter 4₁ und 6₁ sind ebenso wie der maschinenseitige Drei-Punkt-Pulsstromrichter 14 in Dreipunkt-Schaltungstechnik ausgeführt, wobei als Stromrichterventile ebenfalls HV-IGBT verwendet werden. Wechselspannungsseitig ist der selbstgeführte Pulsstromrichter 4₁ mit seinen Anschlüssen U1, V1, W1 mit der Sekundärwicklung 18 des Dreiwicklungstransformators 22 verknüpft. Der selbstgeführte Pulsstromrichter 6₁ ist wechselstromseitig mit seinen Anschlüssen U2, V2, W2 mit der Sekundärwicklung 20 des Dreiwicklungstransformators 22 verbunden.

In dieser Darstellung gemäß FIG 2 ist auch noch der Spannungszwischenkreis 12 näher dargestellt. Die beiden Kondensatoren 8 und 10 dieses Spannungszwischenkreises 12 sind jeweils in drei Teilkondensatoren 8₁, 8₂, 8₃ und 10₁, 10₂, 10₂ unterteilt. Dabei sind die beiden Teilkondensatoren 8₂, 8₃ bzw. 10₂, 10₃ elektrisch in Reihe geschaltet und diese Reihenschaltung ist dann elektrisch parallel zum Kondensator 8₁ bzw. 10₁ geschaltet. Der Verknüpfungspunkt der beiden in Reihe geschalteten Kondensatoren 8₂, 8₃ bzw. 10₂, 10₃ bilden ein Mittelspannungspotential M1 bzw. M2 für den Drei-Punkt-Pulsstromrichter 4₁ bzw. 6₁. Diese beiden Reihenschaltungen der Teilkondensatoren 8₂, 8₃ und 10₂, 10₃ sind außerdem elektrisch in Reihe geschaltet. Der Verknüpfungspunkt dieser beiden Reihenschaltungen ist mit dem mittleren Spannungspotential M des Spannungszwischenkreises 12 verbunden. Da die Kondensatoren 8 und 10 des Spannungszwischenkreises 12 jeweils auf mehrere Teilkondensatoren 8₁, 8₂, 8₃ und 10₁, 10₂, 10₃ aufgeteilt sind, können die Teilkondensatoren 8₁ und 10₁ räumlich dem Maschinen-Stromrichter 14 und die Teilkondensatoren 8₂, 8₃ und 10₂, 10₃ räumlich den selbstgeführten Pulsstromrichters 4₁, 6₁ des Eingangs-Stromrichters 2 zugeordnet werden.

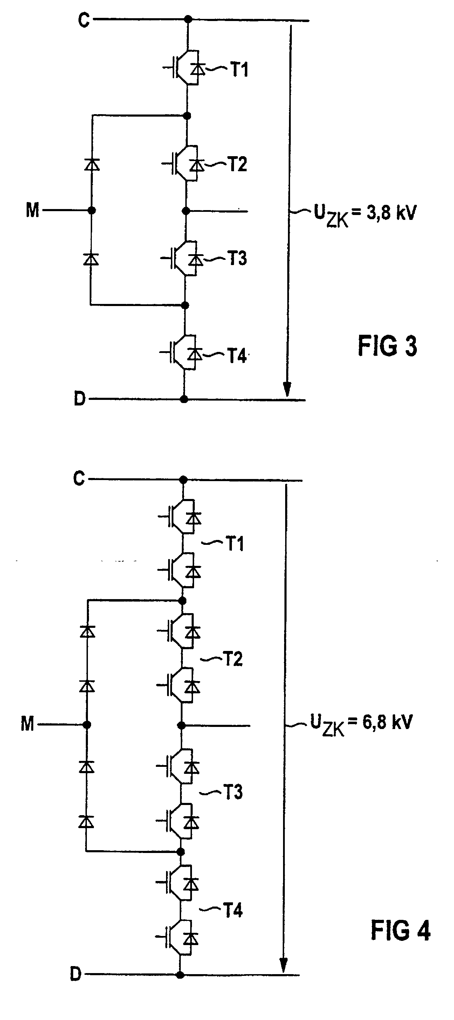

Die FIG 3 zeigt ein Phasenmodul des Maschinen-Stromrichters 14, das in der Dreipunkt-Schaltungstechnik vier Stromrichterventile T1, T2, T3 und T4 aufweist. Jedes Stromrichterventil T1 bis T4 weist nur einen Halbleiterschalter auf, insbesondere einen HV-IGBT. Deshalb ist die Reihenschaltzahl in dieser Ausführungsform Eins. Dieses Phasenmodul kann zwischen seinen Gleichspannungs-Potentialen C und D eine Gleichspannung U_{ZK} von maximal 3,8 kV aufnehmen. Diese Gleichspannung U_{ZK} wird vom Eingangs-Stromrichter 2 erzeugt. Da die beiden Teilstromrichter 4₁ und 6₁ identisch sind und gleichspannungsseitig elektrisch in Reihe geschaltet sind, erzeugt jeder Teilstromrichter 4₁ und 6₁ die halbe Zwischenkreisspannung U_{ZK} in Höhe von 1,9 kV. Da jedoch das Phasenmodul die doppelte Spannungsfestigkeit aufweist, können im Vergleich zum Phasenmodul des maschinenseitigen Drei-Punkt-Pulsstromrichters 14 niedersperrende Halbleiterschalter verwendet werden. Diese niedersperrenden HV-IGBT können mit einer höheren Schaltfrequenz oder höheren Stromausnutzung betrieben werden.

Die FIG 4 zeigt ein Phasenmodul, dessen Stromrichterventile T1 bzw. T4 jeweils zwei Halbleiterschalter, insbesondere HV-IGBT, aufweisen. Die Reihenschaltzahl ist hier Zwei. Zwischen den Gleichspannungs-Potentialen C und D kann eine maximale Gleichspannung U_{ZK} von 6,8 kV auftreten. Bei einem Spannungszwischenkreis-Umrichter gemäß FIG 1 mit einem erfindungsgemäßen Eingangs-Stromrichters 2 sind die Phasenmodule des maschinenseitigen Drei-Punkt-Pulsstromrichters 14 gemäß FIG 4 und die Phasenmodule der Teilstromrichter 4₁ und 6₁ des Eingangs-Stromrichters 2 gemäß FIG 3 ausgebildet.

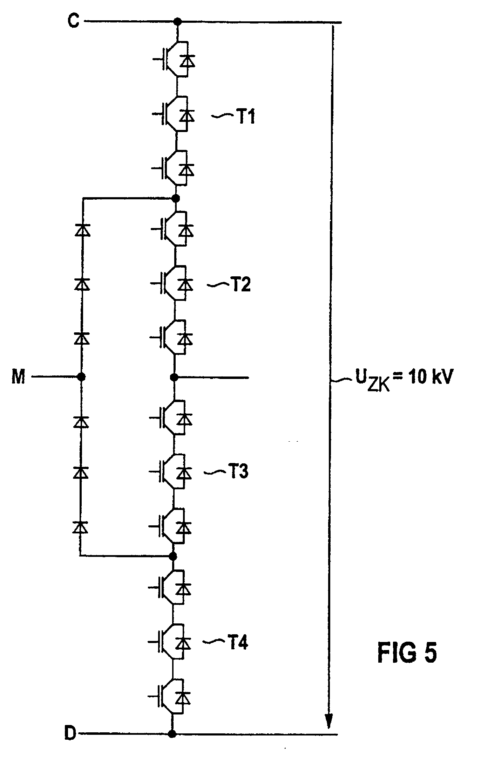

In der FIG 5 ist ein Phasenmodul dargestellt, dessen Stromrichter-Ventile T1 bis T4 jeweils drei Halbleiterschalter, insbesondere HV-IGBT, aufweisen. Die Reihenschaltzahl dieser Stromrichterventile ist Drei. Mit diesem Phasenmodul mit der Reihenschaltzahl Drei kann eine maximale Gleichspannung U_{ZK} von 10 kW zwischen den Potentialen C und D abfallen bzw. anstehen. Bei einem Spannungszwischenkreis-Umrichter für eine genormte Mittelspannung von 6 kV sind die Phasenmodule des Maschinen-Stromrichters 14 gemäß der FIG 5 und die Phasenmodule der Teilstromrichter 4₁ und 6₁ des Eingangs-Stromrichters 2 gemäß FIG 4 ausgebildet.

Somit ist die Reihenschaltzahl der Teilstromrichter 4₁ und 6₁ gegenüber der Reihenschaltzahl des Maschinen-Stromrichters 14 ab einer genormten Mittelspannung von 3,3 kV um Eins kleiner. Dadurch sind die Phasenmodule der Teilstromrichter 4₁ und 6₁ gegenüber den Phasenmodulen des Maschinen-Stromrichters 14 aufwandsärmer. Bei einem Spannungszwischenkreis-Umrichter für die Mittelspannung 4,16 kV ist die Anzahl der Halbleiterschalter der beiden Teilstromrichter 4₁ und 6₁ des Eingangs-Stromrichters 2 gleich der Anzahl der Halbleiterschalter des Eingangs-Stromrichters 2 in der Ausführungsform als Active Front End. Das heißt, ohne die Anzahl der Halbleiterschalter zu erhöhen, werden Oberschwingungen der 5., 7., 17. und 19. Oberwelle allein durch deren Verschaltung eliminiert.

## Patentansprüche

1. Spannungszwischenkreis-Umrichter mit einem zwei Teilstromrichter (4,6) aufweisenden 12-pulsigen Eingangs-Stromrichter (2), einem zwei elektrisch in Reihe geschalteten Kondensatoren (8,10) aufweisenden Spannungszwischenkreis (12) und einem maschinenseitigen Drei-Punkt-Pulsstromrichter (14), wobei die beiden Teilstromrichter (4,6) des Eingangs-Stromrichters (2) gleichspannungsseitig jeweils mit einem Kondensator (8,10) des Spannungszwischenkreises (12) elektrisch leitend verbunden sind,
**dadurch gekennzeichnet,**
**daß** die Teilstromrichter (4,6) des Eingangs-Stromrichters (2) jeweils ein selbstgeführter Pulsstromrichter (4₁, 6₁) sind.

2. Spannungszwischenkreis-Umrichter nach Anspruch 1,
**dadurch gekennzeichnet,**
**daß** die selbstgeführten Pulsstromrichter (4₁,6₁) jeweils Drei-Punkt-Pulsstromrichter sind.

3. Spannungszwischenkreis-Umrichter nach Anspruch 1 und 2,
**dadurch gekennzeichnet,**
**daß** jeder Kondensator (8,10) des Spannungszwischenkreises (12) derart aufgeteilt ist, daß ein Kondensator (8₁,10₁) dem maschinenseitigen Drei-Punkt-Pulsstromrichter (14) und zwei Kondensatoren (8₂,8₃;10₂,10₃) einem Pulsstromrichter (4₁,6₁) des Eingangs-Stromrichters (2) zugeordnet sind.

4. Spannungszwischenkreis-Umrichter nach einem der vorgenannten Ansprüche,
**dadurch gekennzeichnet,**
**daß** die Reihenschaltzahl der Stromrichterventile (T1,T2,T3,T4) der selbstgeführten Pulsstromrichter (4₁,6₁) des Eingangs-Stromrichters (2) gleich der Reihenschaltzahl der Stromrichterventile (T1,T2,T3,T4) des maschinenseitigen Drei-Punkt-Pulsstromrichters (14) ist.

5. Spannungszwischenkreis-Umrichter nach einem der Ansprüche 1 bis 3,
**dadurch gekennzeichnet,**
**daß** die Reihenschaltzahl der Stromrichterventile (T1,T2,T3,T4) der selbstgeführten Pulsstromrichter (4₁, 6₁) des Eingangs-Stromrichters (2) um Eins kleiner ist als die Reihenschaltzahl der Stromrichterventile (T1,T2,T3,T4) des maschinenseitigen Drei-Punkt-Pulsstromrichters (14) ist.

6. Spannungszwischenkreis-Umrichter nach einem der vorgenannten Ansprüche,
**dadurch gekennzeichnet,**
**daß** als Stromrichterventile (T1,T2,T2,T4) der selbstgeführten Pulsstromrichter (4₁,6₁) des Eingangs-Stromrichters (2) und des maschinenseitigen Drei-Punkt-Pulsstromrichters (14) Highvoltage-Insulated-Gate-Bipolar-Transistoren vorgesehen sind.

## Claims

1. Voltage intermediate circuit converter having a 12-pulse input converter (2) which has two converter elements (4, 6), having a voltage intermediate circuit (12) which has two capacitors (8, 10) which are connected electrically in series, and having a machine-side three-point pulse-controlled converter (14), with the two converter elements (4, 6) of the input converter (2) being electrically conductively connected on the DC side to a respective capacitor (8, 10) in the voltage intermediate circuit (12), **characterised in that** the converter elements (4, 6) of the input converter (2) have a respective self-commutated pulse-controlled converter (4₁, 6₁).

2. Voltage intermediate circuit converter according to Claim 1, **characterised in that** the self-commutated pulse-controlled converters (4₁, 6₁) are each three-point pulse-controlled converters.

3. Voltage intermediate circuit converter according to Claims 1 and 2, **characterised in that** each capacitor (8, 10) in the voltage intermediate circuit (12) is split such that one capacitor (8₁, 10₁) is associated with the machine-side three-point pulse-controlled converter (14), and two capacitors (8₂, 8₃; 10₂, 10₃) are associated with a pulse-controlled converter (4₁, 6₁) in the input converter (2).

4. Voltage intermediate circuit converter according to one of the above-mentioned claims, **characterised in that** the number of series-connected active converter devices (T1, T2, T3, T4) in the self-commutated pulse-controlled converters (4₁, 6₁) in the input converter (2) is equal to the number of series-connected active converter devices (T1, T2, T3, T4) in the machine-side three-point pulse-controlled converter (14).

5. Voltage intermediate circuit converter according to one of Claims 1 to 3, **characterised in that** the number of series-connected active converter devices (T1, T2, T3, T4) in the self-commutated pulse-controlled converters (4₁, 6₁) in the input converter (2) is one less than the number of series-connected active converter devices (T1, T2, T3, T4) in the machine-side three-point pulse-controlled converter (14).

6. Voltage intermediate circuit converter according to one of the above-mentioned claims, **characterised in that** high-voltage insulated gate bipolar transistors are provided as active converter devices (T1, T2, T2, T4) of the self-commutated pulse-controlled converters (4₁, 6₁) in the input converter (2) and in the machine-side three-point pulse-controlled converter (14).

## Revendications

1. Convertisseur indirect de tension comprenant un convertisseur d'entrée à 12 impulsions (2) comportant deux convertisseurs partiels (4, 6), avec un circuit intermédiaire de tension (12) comportant deux condensateurs (8, 10) branchés électriquement en série et un convertisseur pulsé à trois points côté machine (14), dans lequel les deux convertisseurs partiels (4, 6) du convertisseur d'entrée (2) sont reliés de façon électriquement conductrice du côté de la tension continue respectivement à un condensateur (8, 10) du circuit intermédiaire de tension (12),
**caractérisé par le fait que** les convertisseurs partiels (4, 6) du convertisseur d'entrée (2) sont chacun un convertisseur pulsé (4₁, 6₁) autocommuté.

2. Convertisseur indirect de tension selon la revendication 1,
**caractérisé par le fait que** les convertisseurs pulsés autocommutés (4₁, 6₁) sont des convertisseurs pulsés à trois points.

3. Convertisseur indirect de tension selon la revendication 1 ou 2,
**caractérisé par le fait que** chaque condensateur (8, 10) du circuit intermédiaire de tension (12) est divisé de telle sorte qu'un condensateur (8₁, 10₁) est associé au convertisseur pulsé à trois points côté machine (14) et que deux condensateurs (8₂, 8₃ ; 10₂, 10₃) sont associés à un convertisseur pulsé (4₁, 6₁) du convertisseur d'entrée (2).

4. Convertisseur indirect de tension selon l'une des revendications précédentes,
**caractérisé par le fait que** le nombre de branchements en série des soupapes de convertisseur (T1, T2, T3, T4) des convertisseurs pulsés autocommutés (4₁, 6₁) du convertisseur d'entrée (2) est égal au nombre de branchements en série des soupapes de convertisseur (T1, T2, T3, T4) du convertisseur pulsé à trois points côté machine (14).

5. Convertisseur indirect de tension selon l'une des revendications 1 à 3,
**caractérisé par le fait que** le nombre de branchements en série des soupapes de convertisseur (T1, T2, T3, T4) des convertisseurs pulsés autocommutés (4₁, 6₁) du convertisseur d'entrée (2) est inférieur de un au nombre de branchements en série des soupapes de convertisseur (T1, T2, T3, T4) du convertisseur pulsé à trois points côté machine (14).

6. Convertisseur indirect de tension selon l'une des revendications précédentes,
**caractérisé par le fait que** des transistors HV-IGBT High Voltage Insulated Gate Bipolar Transistor sont prévus comme soupapes (T1, T2, T3, T4) des convertisseurs pulsés autocommutés (4₁, 6₁) du convertisseur d'entrée (2) et du convertisseur pulsé à trois points côté machine (14).
